# EUROPEAN PATENT APPLICATION

(11) **EP 3 882 077 A1**
(43) Date of publication of application: **22.09.2021**
(21) Application number: 19884994.5
(22) Date of filing: 05.11.2019
(51) Int. Cl.: B60Q 1/26, B60Q 1/02, G08G 1/16

(54) **VEHICLE LIGHTING SYSTEM**

(30) Priority: 15.11.2018 JP 2018214578
(71) Applicant: KOITO MANUFACTURING CO., LTD., Minato-ku Tokyo 108-8711 (JP)
(72) Inventor: HARADA, Tomoaki, Shizuoka-shi, Shizuoka 424-8764 (JP); KANEKO, Susumu, Shizuoka-shi, Shizuoka 424-8764 (JP); TAKEDA, Hajime, Shizuoka-shi, Shizuoka 424-8764 (JP)
(74) Representative: Hoffmann Eitle
(86) International application number: PCT/JP2019/043301
(87) International publication number: WO 2020/100655

(57) **Abstract**

A vehicle lighting system (4) comprising: a road surface drawing lamp (42) configured so as to emit light toward an object such as the ground surface or a wall in the surroundings of a vehicle (1), thereby drawing prescribed information as a road surface drawing; a brightness sensor (45) that can measure the brightness of the surroundings of the vehicle (1); and a lamp control unit (43) that controls the road surface drawing lamp (42), wherein when the brightness measured by the brightness sensor (45) exceeds a prescribed brightness, the lamp control unit (43) displays the prescribed information on a vehicle-exterior display unit (46) that can display the prescribed information.

## Description

### TECHNICAL FIELD

The present disclosure relates to a vehicle lighting system.

### BACKGROUND ART

Nowadays, a research about an automatic driving technique for an automobile is actively conducted in countries, and legislation for allowing a vehicle (hereinafter, a "vehicle" refers to an automobile) in an automatic driving mode to travel on a public road is discussed in each country. A vehicle system automatically controls traveling of the vehicle in the automatic driving mode. Specifically, in the automatic driving mode, the vehicle system automatically executes at least one of steering control (vehicle traveling direction control), brake control and accelerator control (vehicle braking control and vehicle accelerating and decelerating control) based on information (surrounding environment information) that indicates a surrounding environment of the vehicle and is acquired from a camera or a sensor such as a radar (for example, a laser radar or a millimeter wave radar). On the other hand, a driver controls traveling of a vehicle in a manual driving mode to be described below as in most vehicles in the related art. Specifically, in the manual driving mode, traveling of the vehicle is controlled according to an operation of the driver (a steering operation, a braking operation, and an accelerating operation), and the vehicle system does not automatically execute steering control, braking control, and accelerator control. A vehicle driving mode is not a concept existing only in some vehicles, but a concept existing in all vehicles including the vehicles in the related art that do not have an automatic driving function, and a vehicle driving mode is classified according to, for example, a vehicle control method.

Therefore, it is expected in the future that a vehicle traveling in an automatic driving mode (hereinafter, refers to as an "automatic driving vehicle" as appropriate) and a vehicle traveling in a manual driving mode (hereinafter, referred to as a "manual driving vehicle" as appropriate) coexist on a public road.

As an example of the automatic driving technique, Patent Literature 1 discloses an automatic following travel system in which a following vehicle automatically follows a preceding vehicle. In the automatic following travel system, each of the preceding vehicle and the following vehicle includes a lighting system, and character information for preventing other vehicles from cutting in between the preceding vehicle and the following vehicle is displayed by the lighting system of the preceding vehicle, and character information indicating that the following vehicle automatically follows the preceding vehicle is displayed by the lighting system of the following vehicle.

Patent Literature 1: JP H9-277887 A

### SUMMARY OF INVENTION

In an automatic driving society where an automatic driving vehicle and a manual driving vehicle coexist, a so-called road surface rendering lamp is expected to be mounted on a vehicle to visually present various kinds of information (for example, information about an automatic driving mode of a vehicle) related to automatic driving to a pedestrian or the like by rendering the various kinds of information. In this case, the pedestrian can see the rendered information and can know the information. Therefore, it is possible to reduce anxiety of the pedestrian about the automatic driving vehicle. However, when a road surface on which information is to be rendered is bright, visibility of the rendered information may be reduced.

An object of the present disclosure is to provide a vehicle lighting system capable of transmitting information to a pedestrian or the like by a display unit having higher visibility in accordance with illuminance surrounding a vehicle.

According to an aspect of the present disclosure, there is provided a vehicle lighting system. The vehicle lighting system includes a road surface rendering lamp configured to render predetermined information serving as road surface rendering by emitting light toward an object such as a ground or a wall surrounding a vehicle, an illuminance sensor capable of measuring illuminance surrounding the vehicle, and a lamp control unit configured to control the road surface rendering lamp. When the illuminance measured by the illuminance sensor exceeds predetermined illuminance, the lamp control unit displays the predetermined information on a vehicle exterior display unit capable of displaying the predetermined information.

According to the vehicle lighting system having the above configuration, when the illuminance surrounding the vehicle exceeds the predetermined illuminance, the lamp control unit displays the predetermined information on the vehicle exterior display unit.

In this manner, according to the above configuration, information can be transmitted to a pedestrian or the like by a display unit having higher visibility in accordance with illuminance surrounding the vehicle.

In the vehicle lighting system according to another aspect of the present disclosure, when the illuminance measured by the illuminance sensor exceeds predetermined illuminance, the lamp control unit controls the road surface rendering lamp not to emit light.

According to the vehicle lighting system having the above configuration, when the illuminance measured by the illuminance sensor exceeds the predetermined illuminance, light is not emitted from the road surface rendering lamp.

In this manner, according to the above configuration, attention of a pedestrian or the like can be concentrated on information displayed on the vehicle exterior display unit.

In the vehicle lighting system according to still another aspect of the present disclosure, the vehicle exterior display unit is a display device provided on another vehicle.

In the vehicle lighting system according to still another aspect of the present disclosure, the vehicle exterior display unit is a display device provided as a part of a public structure.

In the vehicle lighting system according to still another aspect of the present disclosure, the vehicle exterior display unit is a display screen provided on the vehicle.

According to the vehicle lighting system having the above configuration, the information can be more easily understood by a pedestrian or the like and can be transmitted to the pedestrian or the like.

In the vehicle lighting system according to still another aspect of the present disclosure, when the illuminance measured by the illuminance sensor is less than the predetermined illuminance, the lamp control unit controls the road surface rendering lamp to emit light toward the object.

According to the vehicle lighting system having the above configuration, when the illuminance measured by the illuminance sensor is less than the predetermined illuminance again, the lamp control unit controls the road surface rendering lamp again to emit light toward the object. That is, when the illuminance is less than the predetermined illuminance again, the predetermined information is displayed again by the road surface rendering. Therefore, an appropriate display method can be adopted in accordance with illuminance surrounding the vehicle.

According to the present disclosure, it is possible to provide a vehicle lighting system capable of transmitting information to a pedestrian or the like by a display unit having higher visibility in accordance with illuminance surrounding a vehicle.

### BRIEF DESCRIPTION OF DRAWINGS

Fig. 1A is a top view showing a vehicle equipped with a vehicle lighting system according to an embodiment.
Fig. 1B is a left side view showing the vehicle shown in Fig. 1A.
Fig. 2 is a block diagram showing a vehicle system including the vehicle lighting system according to the embodiment.
Fig. 3 is a flowchart showing a processing executed up to when predetermined information is displayed.
Fig. 4A is a diagram showing a state of rendering predetermined information onto a road surface.
Fig. 4B is a diagram showing a state of displaying predetermined information on a vehicle exterior display unit.
Fig. 5A is a diagram showing a state of rendering predetermined information onto a road surface.
Fig. 5B is a diagram showing a state of displaying predetermined information on a vehicle exterior display unit.
Fig. 6A is a diagram showing a state of rendering predetermined information onto a road surface.
Fig. 6B is a diagram showing a state of displaying predetermined information on a vehicle exterior display unit.

### DESCRIPTION OF EMBODIMENTS

Hereinafter, embodiments will be described in detail with reference to the accompanying drawings. Members having the same reference numerals as those already described in the description of the present embodiment will be omitted for convenience of description. In addition, dimensions of members shown in the drawings may be different from actual dimensions thereof for the convenience of description.

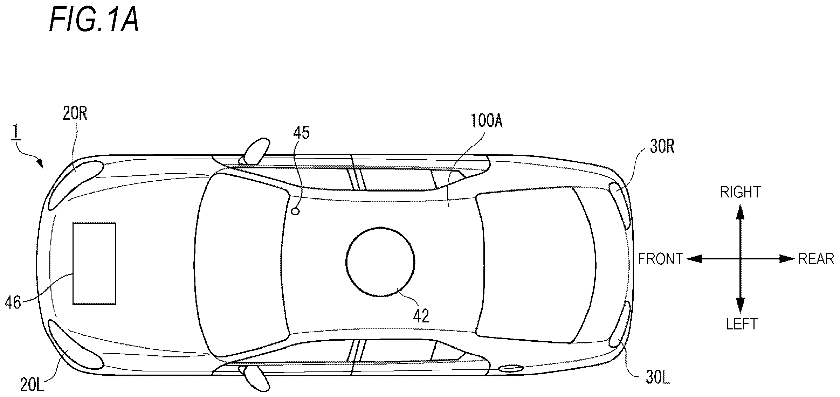

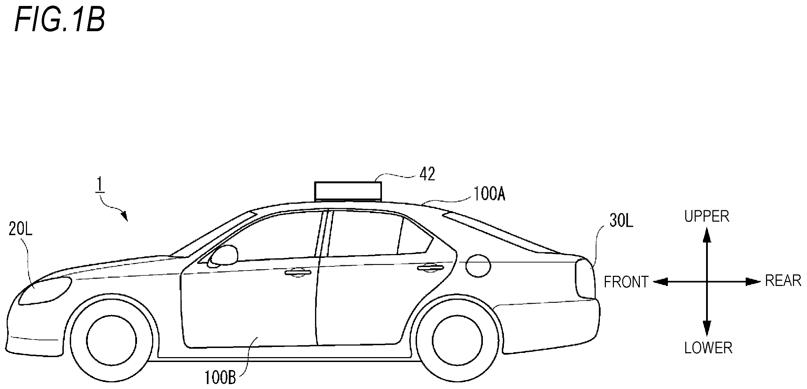

In the description of the present embodiment, a "left-right direction", a "front-rear direction", and an "upper-lower direction" are appropriately described for the convenience of description. These directions are relative directions set for a vehicle 1 shown in Figs. 1A and 1B. Here, the "upper-lower direction" is a direction including an "upper direction" and a "lower direction". The "front-rear direction" is a direction including a "front direction" and a "rear direction". The "left-right direction" is a direction including a "left direction" and a "right direction".

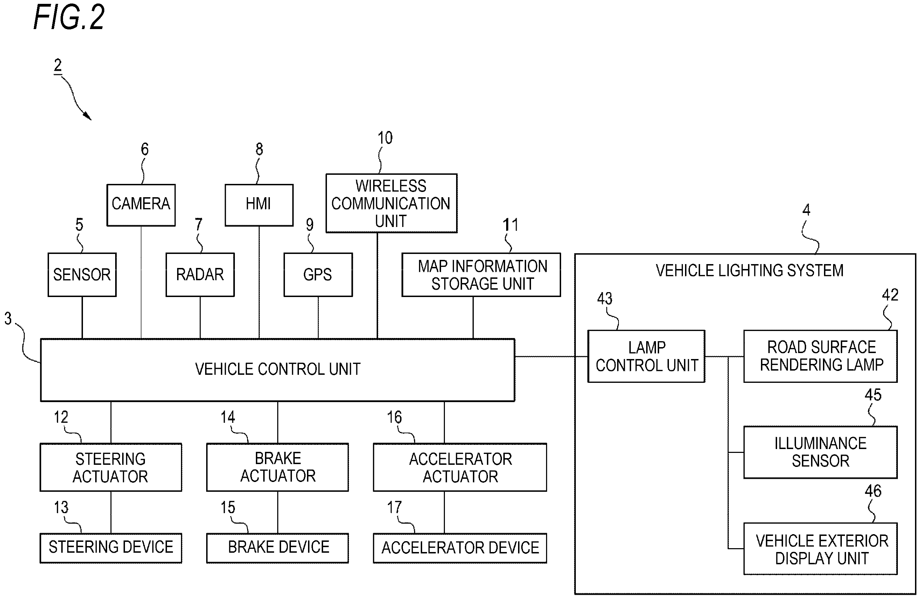

Hereinafter, a vehicle lighting system 4 according to the present embodiment (see Fig. 2. Hereinafter, simply referred to as a "lighting system 4") will be described. Fig. 1A is a top view showing the vehicle 1. Fig. 1B is a left side view showing the vehicle 1. The vehicle 1 is a vehicle that can travel in an automatic driving mode, and includes the lighting system 4. The lighting system 4 includes a road surface rendering lamp 42, a lamp control unit 43, an illuminance sensor 45, and a vehicle exterior display unit 46 (see Fig. 2). The road surface rendering lamp 42 is disposed on a vehicle body roof 100A of the vehicle 1, and emits light toward the outside of the vehicle 1.

The road surface rendering lamp 42 is, for example, a laser scanning device including a laser light source and a light deflection device that deflects laser light emitted from the laser light source. The light deflection device is, for example, a movable mirror such as a micro electro mechanical systems (MEMS) mirror or a Galvano mirror. As will be described later, the road surface rendering lamp 42 renders a light pattern onto a road surrounding an object by scanning the road surface with laser light.

Although a single road surface rendering lamp 42 is disposed on the vehicle body roof 100A in the present embodiment, the number, an arrangement, a shape of the road surface rendering lamp 42 is not particularly limited as long as the road surface rendering lamp 42 can emit a light pattern toward an object present in any direction relative to the vehicle 1. For example, four road surface rendering lamps 42 are provided. Among the four road surface rendering lamps 42, two road surface rendering lamps are respectively disposed in a left head lamp 20L and a right head lamp 20R, and two road surface rendering lamps 42 are respectively disposed in a left rear combination lamp 30L and a right rear combination lamp 30R. Alternatively, the road surface rendering lamp 42 may be disposed to surround a side face 100B of the vehicle 1.

Next, a vehicle system 2 of the vehicle 1 will be described with reference to Fig. 2. Fig. 2 is a block diagram showing the vehicle system 2. As shown in Fig. 2, the vehicle system 2 includes a vehicle control unit 3, the lighting system 4, a sensor 5, a camera 6, a radar 7, a human machine interface (HMI) 8, a global positioning system (GPS) 9, a wireless communication unit 10, and a map information storage unit 11. The vehicle system 2 further includes a steering actuator 12, a steering device 13, a brake actuator 14, a brake device 15, an accelerator actuator 16, and an accelerator device 17.

The vehicle control unit 3 controls traveling of the vehicle 1. The vehicle control unit 3 is implemented by an electronic control unit (ECU). The electronic control unit includes a processor such as a central processing unit (CPU), a read only memory (ROM) in which various vehicle control programs are stored, and a random access memory (RAM) in which various kinds of vehicle control data are temporarily stored. The processor loads a program specified from the various vehicle control programs stored in the ROM onto the RAM and executes various processings in cooperation with the RAM.

The sensor 5 includes an acceleration sensor, a speed sensor, a gyro sensor, and the like. The sensor 5 detects a traveling state of the vehicle 1 and outputs traveling state information to the vehicle control unit 3. The sensor 5 may further include a seating sensor that detects whether a driver sits on a driver seat, a face direction sensor that detects a direction of a face of the driver, an external weather sensor that detects an external weather condition, a human sensor that detects whether there is a human being in the vehicle, and the like.

The camera 6 is, for example, a camera including an imaging element such as a charge-coupled device (CCD) or a complementary MOS (CMOS). The radar 7 is a millimeter wave radar, a microwave radar, a laser radar, or the like. The camera 6 and/or the radar 7 detect a surrounding environment of the vehicle 1 (another vehicle, a pedestrian, a road shape, a traffic sign, an obstacle, or the like), and output surrounding environment information to the vehicle control unit 3.

The HMI 8 includes an input unit that receives an input operation from the driver, and an output unit that outputs traveling information or the like to the driver. The input unit includes a steering wheel, an accelerator pedal, a brake pedal, a driving mode switch for switching a driving mode of the vehicle 1, and the like. The output unit is a display that displays various kinds of traveling information.

The GPS 9 acquires current position information of the vehicle 1 and outputs the acquired current position information to the vehicle control unit 3. The wireless communication unit 10 receives information (for example, traveling information) related to another vehicle present surrounding the vehicle 1 from the another vehicle and transmits information (for example, traveling information) related to the vehicle 1 to the another vehicle (vehicle-to-vehicle communication). The wireless communication unit 10 receives infrastructure information from an infrastructure facility such as traffic lights or a sign lamp and transmits traveling information of the vehicle 1 to the infrastructure facility (road-to-vehicle communication). The vehicle 1 may directly communicate with the another vehicle or the infrastructure facility, or may communicate with the another vehicle or the infrastructure facility via a wireless communication network. The map information storage unit 11 is an external storage device such as a hard disk drive in which map information is stored, and the map information storage unit 11 outputs the map information to the vehicle control unit 3.

The lighting system 4 includes the road surface rendering lamp 42, the lamp control unit 43, the illuminance sensor 45, and the vehicle exterior display unit 46. The road surface rendering lamp 42 emits laser light (particularly, a ring-shaped or linear light pattern) toward the outside of the vehicle 1 (particularly, an object such as a road surface and a wall surrounding the vehicle 1). The lamp control unit 43 is implemented by an electronic control unit (ECU). The lamp control unit 43 controls the road surface rendering lamp 42 to emit laser light toward the object based on position information of the object. The lamp control unit 43 and the vehicle control unit 3 may be implemented by the same electronic control unit. The illuminance sensor 45 detects illuminance surrounding the vehicle 1. Illuminance information related to the illuminance detected by the illuminance sensor 45 is transmitted to the lamp control unit 43. The vehicle exterior display unit 46 is provided at a front side of the vehicle 1 (see Fig. 1A). The vehicle exterior display unit 46 can display predetermined information such as information related to a traveling path of the vehicle 1. The lamp control unit 43 stores information serving as a determination criterion (hereinafter, refers to as "determination criterion information") for determining whether to render the predetermined information onto a road surface or display the predetermined information on the vehicle exterior display unit 46. The determination criterion information is, for example, a threshold related to illuminance. The lamp control unit 43 compares illuminance surrounding the vehicle 1 detected by the illuminance sensor 45 with a threshold related to illuminance, and determines whether the predetermined information should be rendered onto the road surface or on the vehicle exterior display unit 46.

When the vehicle 1 travels in an automatic driving mode, the vehicle control unit 3 automatically generates at least one of a steering control signal, an accelerator control signal, and a brake control signal based on traveling state information, surrounding environment information, current position information, map information, and the like. The steering actuator 12 receives the steering control signal from the vehicle control unit 3 and controls the steering device 13 based on the received steering control signal. The brake actuator 14 receives the brake control signal from the vehicle control unit 3 and controls the brake device 15 based on the received brake control signal. The accelerator actuator 16 receives the accelerator control signal from the vehicle control unit 3 and controls the accelerator device 17 based on the received accelerator control signal. In this manner, traveling of the vehicle 1 is automatically controlled by the vehicle system 2 in the automatic driving mode.

On the other hand, when the vehicle 1 travels in a manual driving mode, the vehicle control unit 3 generates a steering control signal, an accelerator control signal, and a brake control signal in accordance with a manual operation of the driver on the accelerator pedal, the brake pedal, and the steering wheel. In this manner, since the steering control signal, the accelerator control signal, and the brake control signal are generated by the manual operation of the driver, traveling of the vehicle 1 is controlled by the driver in the manual driving mode.

Next, a driving mode of the vehicle 1 will be described. The driving mode includes an automatic driving mode and a manual driving mode. The automatic driving mode includes a fully automatic driving mode, an advanced driving support mode, and a driving support mode. In the fully automatic driving mode, the vehicle system 2 automatically executes all kinds of traveling control including steering control, brake control, and accelerator control, and the driver cannot drive the vehicle 1. In the advanced driving support mode, the vehicle system 2 automatically executes all kinds of traveling control including the steering control, the brake control, and the accelerator control, and the driver can drive the vehicle 1 but does not drive the vehicle 1. In the driving support mode, the vehicle system 2 automatically executes a part of traveling control including the steering control, the brake control, and the accelerator control, and the driver drives the vehicle 1 under the driving support of the vehicle system 2. On the other hand, in the manual driving mode, the vehicle system 2 does not automatically execute the traveling control, and the driver drives the vehicle 1 without the driving support of the vehicle system 2.

The driving mode of the vehicle 1 may be switched by operating the driving mode switch. In this case, the vehicle control unit 3 switches the driving mode of the vehicle 1 among four driving modes (the fully automatic driving mode, the advanced driving support mode, the driving support mode, and the manual driving mode) according to an operation of the driver on the driving mode switch. The driving mode of the vehicle 1 may be automatically switched based on information about a travelable section where an automatic driving vehicle can travel or a traveling prohibited section where traveling of an automatic driving vehicle is prohibited, or information about an external weather condition. In this case, the vehicle control unit 3 switches the driving mode of the vehicle 1 based on the information described above. The driving mode of the vehicle 1 may be automatically switched by using the seating sensor, the face direction sensor, or the like. In this case, the vehicle control unit 3 switches the driving mode of the vehicle 1 based on an output signal from the seating sensor or the face direction sensor.

### (First Embodiment)

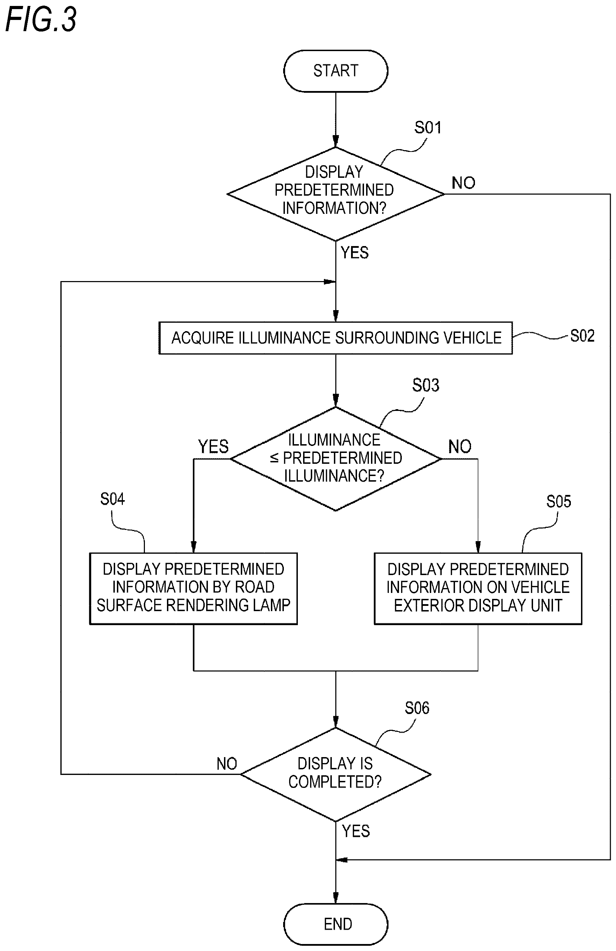

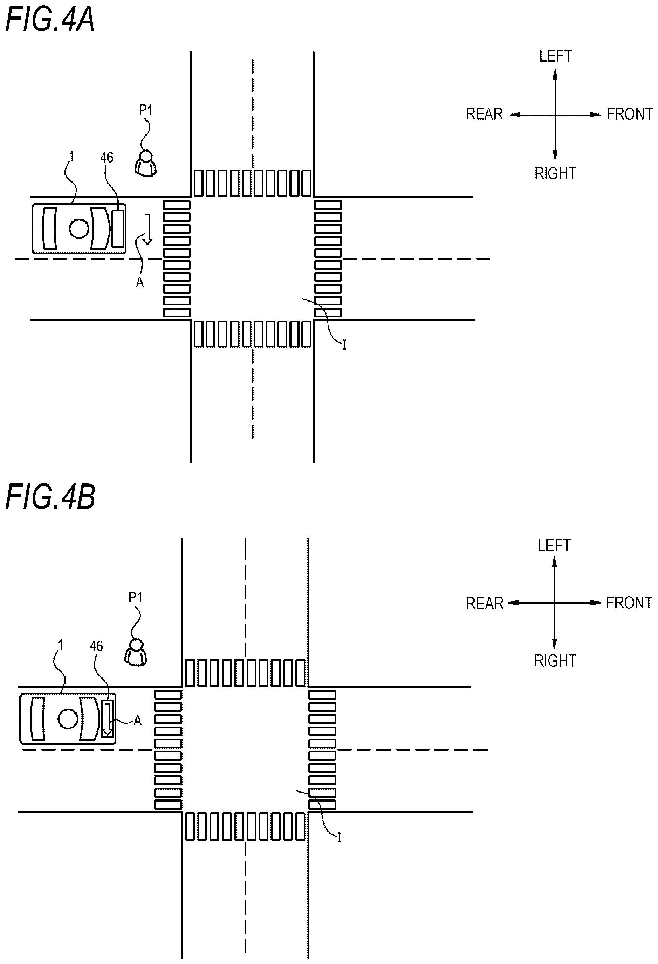

Next, a processing executed up to when predetermined information is displayed according to a first embodiment will be described with reference to Figs. 3, 4A, and 4B. Fig. 3 is a flowchart showing a processing executed up to when predetermined information is displayed. Fig. 4A is a diagram showing a state of rendering predetermined information onto a road surface. Fig. 4B is a diagram showing a state of displaying predetermined information on the vehicle exterior display unit 46.

As shown in Fig. 3, first, the vehicle control unit 3 determines whether it is necessary to display the predetermined information (for example, information related to a traveling path of the vehicle 1) toward the outside of the vehicle (step S01). In Figs. 4A and 4B, the vehicle control unit 3 is about to control the vehicle 1 to turn to the right. At this time, the vehicle control unit 3 determines that it is necessary to display information indicating that the vehicle 1 turns to the right at an intersection I toward the outside of the vehicle. In an example shown in Fig. 4A, the vehicle control unit 3 displays an arrow A with a tip end directed to the right direction on a road surface ahead of the vehicle 1. In an example shown in Fig. 4B, the vehicle control unit 3 displays the arrow A on the vehicle exterior display unit 46. When it is determined that it is not necessary to display the predetermined information toward the outside of the vehicle (NO in step S01), the vehicle control unit 3 ends the processing.

When the vehicle control unit 3 determines that it is necessary to display the predetermined information toward the outside of the vehicle (YES in step S01), the vehicle control unit 3 generates an instruction signal for acquiring illuminance information indicating illuminance surrounding the vehicle 1. The vehicle control unit 3 transmits the instruction signal to the lamp control unit 43. The lamp control unit 43 controls the illuminance sensor 45 to detect the illuminance surrounding the vehicle 1 based on the instruction signal. As a result, the lamp control unit 43 acquires the illuminance information via the illuminance sensor 45 (Step S02).

The lamp control unit 43 determines whether to render the predetermined information onto a road surface or to display the predetermined information on the vehicle exterior display unit 46 based on the illuminance information and the determination criterion information. Specifically, the lamp control unit 43 determines whether the illuminance surrounding the vehicle 1 is equal to or less than a threshold related to illuminance stored in the lamp control unit 43 (step S03). When the illuminance surrounding the vehicle 1 is equal to or less than the threshold (YES in step S03), the lamp control unit 43 controls the road surface rendering lamp 42 to render the predetermined information onto the road surface. As shown in Fig. 4A, the road surface rendering lamp 42 renders the predetermined information onto the road surface ahead of the vehicle 1 (step S04). When a pedestrian P1 sees the arrow A rendered onto the road surface, the pedestrian P1 knows that the vehicle 1 is about to turn to the right at the intersection I.

On the other hand, when the illuminance surrounding the vehicle 1 exceeds the threshold related to the illuminance (NO in step S03), even if the predetermined information is rendered onto the road surface, the pedestrian P1 cannot see the predetermined information. Then, as shown in Fig. 4B, the lamp control unit 43 displays the predetermined information on the vehicle exterior display unit 46 (step S05). When the pedestrian P1 sees the arrow A displayed on the vehicle exterior display unit 46, the pedestrian P1 knows that the vehicle 1 is about to turn to the right at the intersection I. When the illuminance surrounding the vehicle 1 exceeds the threshold related to the illuminance, the lamp control unit 43 controls the road surface rendering lamp 42 not to emit light.

When Step S04 or Step S05 is executed, the lamp control unit 43 determines whether display of the predetermined information can be completed (Step S06). When the lamp control unit 43 determines that the display of the predetermined information can be completed (YES in Step S06), the processing is ended. On the other hand, when the lamp control unit 43 determines that the display of the predetermined information is not completed (NO in Step S06), the processing returns to Step S02.

According to the above configuration, when the illuminance surrounding the vehicle 1 exceeds the predetermined illuminance, the lamp control unit 43 displays the predetermined information on the vehicle exterior display unit 46. That is, when surroundings of the vehicle 1 are bright, the predetermined information is displayed on the vehicle exterior display unit 46, so that the pedestrian or the like can easily see the information transmitted from the vehicle 1.

According to the above configuration, when the illuminance measured by the illuminance sensor 45 exceeds the predetermined illuminance, the road surface rendering lamp 42 does not emit light. That is, when surroundings of the vehicle 1 are bright, the predetermined information is displayed only on the vehicle exterior display unit 46 and is not displayed onto the road surface. As a result, attention of the pedestrian P1 can be concentrated on information displayed on the vehicle exterior display unit 46. Further, the above configuration contributes to power saving of the road surface rendering lamp 42.

According to the above configuration, when the illuminance measured by the illuminance sensor 45 is less than the predetermined illuminance after the predetermined information is displayed on the vehicle exterior display unit 46, the lamp control unit 43 controls the road surface rendering lamp 42 again to emit light toward the object such as the road surface. Therefore, the predetermined information can be displayed by an appropriate display unit in accordance with the illuminance measured by the illuminance sensor 45.

### (Second Embodiment)

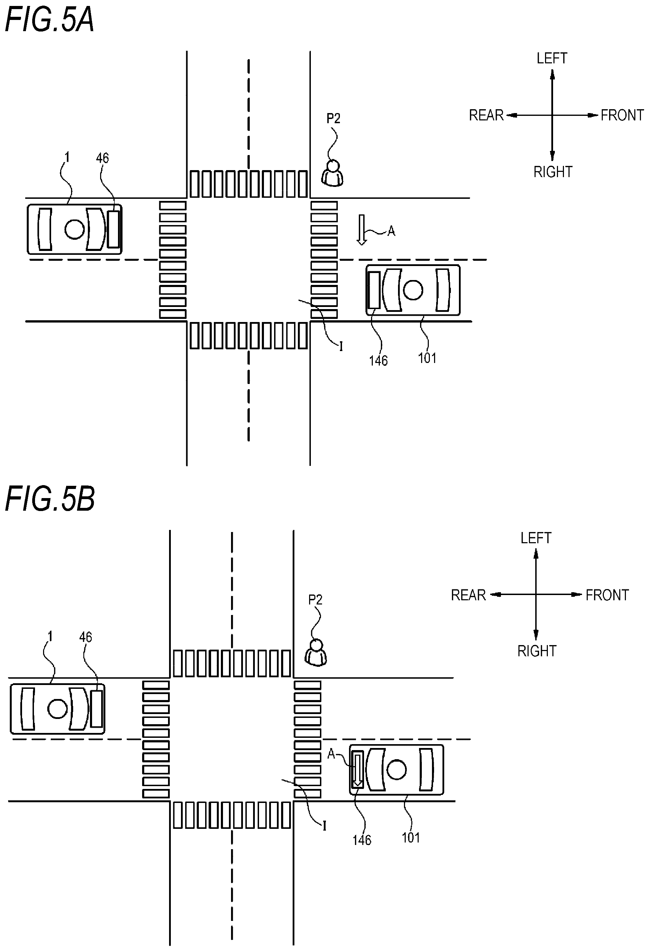

Next, a processing executed up to when predetermined information is displayed according to a second embodiment will be described with reference to Figs. 5A and 5B. Fig. 5A is a diagram showing a state of rendering predetermined information onto a road surface. Fig. 5B is a diagram showing a state of displaying predetermined information on a vehicle exterior display unit 146. Since a flow of the processing executed up to when the predetermined information is displayed according to the second embodiment is similar to a flow of the processing executed according to the first embodiment, only a part different from the first embodiment will be described. Here, a display device that displays the predetermined information may be a display device provided on another vehicle, instead of the vehicle exterior display unit 46. The wireless communication unit 10 can communicate with a communication device provided in the another vehicle. A communication standard is a wireless access in vehicular environment (WAVE) standard, and the communication standard may be any standard. The wireless communication unit 10 may directly communicate with the communication device provided in the another vehicle, or may communicate with the communication device provided in the another vehicle via a wireless communication network. A pedestrian P2 is located at a position far away from the vehicle 1 in the second embodiment. Therefore, compared with a case in which the predetermined information is displayed on a road surface close to the vehicle 1 or on the vehicle exterior display unit 46, predetermined information is displayed on a road surface close to a vehicle 101 or on the vehicle exterior display unit 146 in the second embodiment, and it is easy for the pedestrian P2 to see the predetermined information. Therefore, the predetermined information is displayed on the road surface close to the vehicle 101 different from the vehicle 1 or on the vehicle exterior display unit 146 provided on the vehicle 101 in the second embodiment. The second embodiment is different from the first embodiment in terms of this point. A configuration of the vehicle 101 is the same as the configuration of the vehicle 1. The vehicle 1 and the vehicle 101 can communicate with each other. A configuration of the vehicle exterior display unit 146 is the same as the configuration of the vehicle exterior display unit 46.

In Figs. 5A and 5B, the vehicle control unit 3 is about to control the vehicle 1 to turn to the right. In this case, the vehicle control unit 3 determines whether it is necessary to display the arrow A on the road surface ahead of the vehicle 101 or on the vehicle exterior display unit 146 by the same processing as in the first embodiment.

When the vehicle control unit 3 determines that it is necessary to display the predetermined information on the road surface surrounding the vehicle 101 or on the vehicle exterior display unit 146 (YES in step S01 in Fig. 3), the vehicle control unit 3 acquires illuminance information indicating illuminance surrounding the vehicle 101 via the illuminance sensor 45 by the same processing as in the first embodiment (step S02 in Fig. 3).

The lamp control unit 43 determines whether to render the predetermined information on the road surface or on the vehicle exterior display unit 146 by the same processing as in the first embodiment (step S03 in Fig. 3). When the illuminance surrounding the vehicle 101 is equal to or less than the threshold related to the illuminance (YES in step S03 in Fig. 3), the road surface rendering lamp 42 renders the predetermined information onto the road surface close to the vehicle 101 (step S04 in Fig. 3). In this case, as shown in Fig. 5A, the predetermined information is rendered onto a road surface at a left side of the vehicle 101. When the pedestrian P2 sees the arrow A rendered onto the road surface, the pedestrian P2 knows that the vehicle 1 is about to turn to the right at the intersection I.

On the other hand, when the illuminance surrounding the vehicle 101 exceeds the threshold related to the illuminance (NO in step S03 in Fig. 3), even if the predetermined information is rendered onto the road surface, the pedestrian P2 cannot see the predetermined information. Then, as shown in Fig. 5B, the vehicle control unit 3 displays the predetermined information on the vehicle exterior display unit 146 (step S05 in Fig. 3). When the pedestrian P2 sees the arrow A displayed on the vehicle exterior display unit 146, the pedestrian P2 knows that the vehicle 1 is about to turn to the right at the intersection I. When the illuminance surrounding the vehicle 101 exceeds the threshold related to the illuminance, the lamp control unit 43 controls the road surface rendering lamp 42 not to emit light.

When step S04 or step S05 is executed, step S06 is executed in the same manner as in the first embodiment. The subsequent flow is the same as that in the first embodiment, and a description thereof will be omitted.

According to the above configuration, the predetermined information can be transmitted to the pedestrian P2 at a position away from the vehicle 1.

### (Third Embodiment)

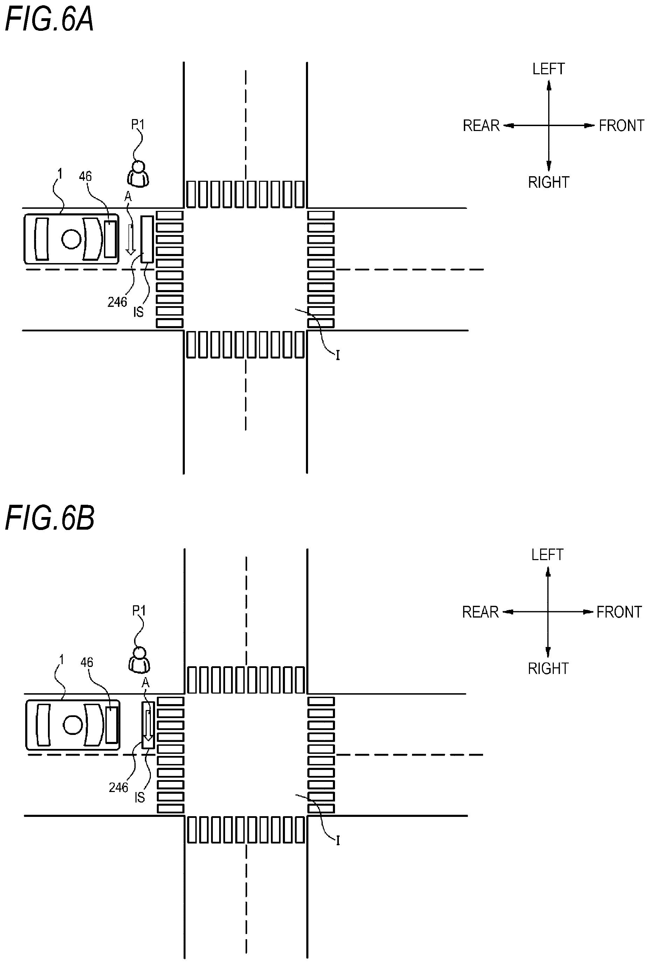

Next, a processing executed up to when predetermined information is displayed according to a third embodiment will be described with reference to Figs. 6A and 6B. Fig. 6A is a diagram showing a state of rendering the predetermined information onto a road surface. Fig. 6B is a diagram showing a state of displaying the predetermined information on a vehicle exterior display unit 246. Since a flow of the processing executed up to when the predetermined information is displayed according to the third embodiment is similar to a flow of the processing executed according to the first embodiment, only a part different from the first embodiment will be described. Here, a display device that displays the predetermined information may be a display device provided in a public structure, instead of the vehicle exterior display unit 46. The wireless communication unit 10 can communicate with a communication device provided in the public structure. A public structure IS is provided on a road surface in the third embodiment. The public structure IS includes a communication device (not shown) that can communicate with the vehicle 1, and a display device (vehicle exterior display unit 246) that displays the predetermined information. The communication device provided in the public structure has the same configuration as the communication device provided in the another vehicle according to the second embodiment. The vehicle exterior display unit 246 is, for example, a liquid crystal screen. The third embodiment is different from the first embodiment in that the predetermined information is displayed on the vehicle exterior display unit 246 provided in the public structure IS when surroundings of the vehicle 1 are bright.

In Figs. 6A and 6B, the vehicle control unit 3 is about to control the vehicle 1 to turn to the right. In this case, the vehicle control unit 3 determines whether it is necessary to display the arrow A on the road surface ahead of the vehicle 1 or on the vehicle exterior display unit 246 by the same processing as in the first embodiment.

When the vehicle control unit 3 determines that it is necessary to display the predetermined information on the road surface surrounding the vehicle 1 or on the vehicle exterior display unit 246 (YES in step S01 in Fig. 3), the vehicle control unit 3 acquires illuminance information indicating illuminance surrounding the vehicle 1 via the illuminance sensor 45 by the same processing as in the first embodiment (step S02 in Fig. 3).

The lamp control unit 43 determines whether to render the predetermined information on the road surface or on the vehicle exterior display unit 246 by the same processing as in the first embodiment (step S03 in Fig. 3). When the illuminance surrounding the vehicle 1 is equal to or less than the threshold related to the illuminance (YES in step S03 in Fig. 3), the road surface rendering lamp 42 renders the predetermined information onto the road surface ahead of the vehicle 1 as shown in Fig. 6A (step S04 in Fig. 3). When the pedestrian P1 sees the arrow A rendered onto the road surface, the pedestrian P1 knows that the vehicle 1 is about to turn to the right at the intersection I.

On the other hand, when the illuminance surrounding the vehicle 1 exceeds the threshold related to the illuminance (NO in step S03 in Fig. 3), even if the predetermined information is rendered onto the road surface, the pedestrian P1 cannot see the predetermined information. The vehicle control unit 3 generates an instruction signal for displaying the predetermined information on the vehicle exterior display unit 246, and transmits the instruction signal to the communication device of the public structure IS. As shown in Fig. 6B, the communication device displays the predetermined information on the vehicle exterior display unit 246 based on the instruction signal (step S05 in Fig. 3). When the pedestrian P1 sees the arrow A displayed on the vehicle exterior display unit 246, the pedestrian P1 knows that the vehicle 1 is about to turn to the right at the intersection I. When the illuminance surrounding the vehicle 1 exceeds the threshold related to the illuminance, the lamp control unit 43 controls the road surface rendering lamp 42 not to emit light.

When step S04 or step S05 is executed, step S06 is executed in the same manner as in the first embodiment. The subsequent flow is the same as that in the first embodiment, and a description thereof will be omitted.

According to the above configuration, for example, when surroundings of the vehicle 1 are bright, the predetermined information can be transmitted to the pedestrian P1 even if the vehicle exterior display unit 46 of the vehicle 1 fails.

Although step S06 is executed in the embodiments described above, step S06 may not be executed.

Although the predetermined information is either rendered onto the road surface or displayed on the vehicle exterior display unit 46, 146, 246 in the embodiments described above, for example, the predetermined information may be both rendered onto the road surface and displayed on the vehicle exterior display unit 46, 146, 246.

Although the illuminance sensor 45 detects illuminance surrounding the vehicle 1 in the embodiments described above, for example, the camera 6 including an illuminance sensor having the same configuration as the illuminance sensor 45 may detect the illuminance surrounding the vehicle 1.

The present disclosure is not limited to the embodiments described above, and may be appropriately modified, improved, and the like. Materials, shapes, dimensions, numerical values, forms, numbers, arrangement places, and the like of components in the embodiments described above can be set freely and are not limited as long as the present disclosure can be achieved.

The present application is based on Japanese Patent Application No. 2018-214578 filed on November 15, 2018, contents of which are incorporated herein as reference.

## Claims

1. A vehicle lighting system comprising:
a road surface rendering lamp configured to render predetermined information serving as road surface rendering by emitting light toward an object such as a ground or a wall surrounding a vehicle;
an illuminance sensor capable of measuring illuminance surrounding the vehicle; and
a lamp control unit configured to control the road surface rendering lamp,
wherein when the illuminance measured by the illuminance sensor exceeds predetermined illuminance, the lamp control unit displays the predetermined information on a vehicle exterior display unit capable of displaying the predetermined information.

2. The vehicle lighting system according to claim 1,
wherein when the illuminance measured by the illuminance sensor exceeds a predetermined illuminance, the lamp control unit controls the road surface rendering lamp not to emit light.

3. The vehicle lighting system according to claim 1 or 2,
wherein the vehicle exterior display unit is a display device provided on another vehicle.

4. The vehicle lighting system according to claim 1 or 2,
wherein the vehicle exterior display unit is a display device provided as a part of a public structure.

5. The vehicle lighting system according to any one of claims 1 to 4,
wherein the vehicle exterior display unit is a display screen provided on the vehicle.

6. The vehicle lighting system according to claim 2,
wherein when the illuminance measured by the illuminance sensor is less than the predetermined illuminance, the lamp control unit controls the road surface rendering lamp to emit light toward the object.
